(19) Europäisches Patentamt / European Patent Office / Office européen des brevets

(11) **EP 3 188 948 B1**

(12) **EUROPÄISCHE PATENTSCHRIFT**

(45) Veröffentlichungstag und Bekanntmachung des Hinweises auf die Patenterteilung:
**02.04.2025 Patentblatt 2025/14**

(21) Anmeldenummer: **15747408.1**

(22) Anmeldetag: **24.07.2015**

(51) Internationale Patentklassifikation (IPC):
**B60W 50/10** *(2012.01)* **B60W 40/09** *(2012.01)*
**G08G 1/01** *(2006.01)* **G01C 21/36** *(2006.01)*

(52) Gemeinsame Patentklassifikation (CPC):
**G01C 21/3685; B60W 40/09; B60W 50/10;**
**G01C 21/3617; G08G 1/0112; G08G 1/0133;**
**G08G 1/0141; G08G 1/14;** B60W 2556/50

(86) Internationale Anmeldenummer:
**PCT/EP2015/067029**

(87) Internationale Veröffentlichungsnummer:
**WO 2016/034333 (10.03.2016 Gazette 2016/10)**

(54) **VERFAHREN ZUM VERARBEITEN VON MESSDATEN EINES FAHRZEUGES ZUR BESTIMMUNG DES BEGINNS EINES PARKSUCHVERKEHRS UND COMPUTERPROGRAMMPRODUKT**

METHOD FOR PROCESSING MEASUREMENT DATA OF A VEHICLE IN ORDER TO DETERMINE THE START OF A SEARCH FOR A PARKING SPACE AND COMPUTER PROGRAM PRODUCT

PROCÉDÉ DE TRAITEMENT DE DONNÉES DE MESURE D'UN VÉHICULE POUR L'ÉTABLISSEMENT DU COMMENCEMENT D'UNE RECHERCHE D'UNE PLACE DE STATIONNEMENT ET PRODUIT-PROGRAMME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2014 DE 102014217654**

(43) Veröffentlichungstag der Anmeldung:
**12.07.2017 Patentblatt 2017/28**

(73) Patentinhaber: **Bayerische Motoren Werke Aktiengesellschaft**
**80809 München (DE)**

(72) Erfinder:
• **KOTZOR, Daniel**
**82229 Seefeld (DE)**
• **BELZNER, Heidrun**
**82229 Seefeld (DE)**

(56) Entgegenhaltungen:
**EP-A1- 1 729 088** **JP-A- 2012 177 712**
**US-A1- 2006 142 940** **US-A1- 2008 154 497**
**US-A1- 2010 052 946**

**Beschreibung**

Die vorliegende Erfindung betrifft ein Verfahren zum Verarbeiten von Messdaten eines Fahrzeuges zur Bestimmung des Beginns eines Parksuchverkehrs sowie ein Computerprogrammprodukt.

Die Bestimmung des Beginns einer Parkplatzsuche ist beispielsweise für unterschiedliche Parkinformationsdienste und für die Städteplanung von großer Bedeutung.

Aktuelle Parkdienste bieten Informationen zu Parkhäusern sowie öffentlich oder gewerblich betriebenen P+R Anlagen (Standort, Auslastung, Reservierung). Die Parksituation im öffentlichen Straßenraum ist weitestgehend unbekannt.

Dynamische Informationen zur Parkplatzsituation im Straßenraum sind mehr und mehr nachgefragt. Die Mehrzahl der Apps auf dem Markt nutzt singuläre Ein- und Ausparkereignisse, die entweder direkt durch den Nutzer kommuniziert oder mit Hilfe eines Smartphones (DE 10 2012 212 347 A1) oder Sensoren erkannt werden sollen.

Um die Schätzung der Parkplatzverfügbarkeit zu verbessern ist eine Aussage zum aktuell vorliegenden Parksuchverkehr von entscheidendem Mehrwert. Viele Apps nutzen hierzu die Eingabe des Nutzers, ab wann er einen Parkplatz sucht.

Weiterhin ist in der DE 10 2012 201 472 A1 ein Verfahren zur Bereitstellung von Parkinformationen zu freien Parkplätzen beschrieben. Hierbei wird ein System zum Generieren von Parkinformationen verwendet. Bei diesem Verfahren wird der Parksuchverkehr bestimmt und in dem Verfahren als Eingangsgröße für das System verwendet.

Die Qualität von Community-basierten Apps ist stark abhängig von der Anzahl und Qualität der Eingaben der Nutzer. Daher ist ein automatisiert ablaufendes Verfahren wünschenswert.

In der US 2010/0052946 A1 werden ein System und ein Verfahren zur Schätzung der Parkdauer beschrieben. Hierbei wird gemäß einer Ausführungsform der Beginn einer Parkplatzsuche erkannt. Der Beginn wird hierbei durch ein Fahrtmuster des Fahrzeuges, beispielsweise bei einer Kreisfahrt erkannt wird. Zudem können in einer alternativen Ausführungsform Informationen betreffend das Ziel verwendet werden, um die Suche nach einem Parkplatz zu erkennen. Hierbei werden das Unterschreiten eines Abstandes zu dem Ziel und ein sich daran anschließender Stopp des Fahrzeuges als Suche nach einem Parkplatz erkannt.

In einer weiteren Ausführungsform wird der Beginn der Parkplatzsuche nach dem eigentlichen Parken zurückermittelt. Dieses Verfahren wird dann eingesetzt, wenn beispielsweise das Ziel an dem Application Server nicht bekannt ist. Auch bei dem Zurückermitteln wird der Beginn der Parkplatzsuche durch Überprüfung von Fahrtmustern durchgeführt.

In der JP 2012177712A ist ein Navigationssystem beschrieben. Hierbei soll die korrekte Ermittlung eines verfügbaren Parkplatzes und eine Führung des Fahrers zu dem Parkplatz geschaffen werden. Hierbei wird erkannt, wenn sich ein Fahrzeug an ein aufgrund von Kartendaten gesetzten Zieles nähert. Ab einer Annäherung des Fahrzeuges an ein Ziel werden Fahrzeuginformationen anderer Fahrzeuge empfangen.

Die Systeme, die bisher vorgestellt wurden, haben einige Nachteile. Beispielsweise ist bei dem in der DE 10 2012 201 472 A1 vorgestellten System nachteilig, dass es stark von der Kalibrierung der Parameter abhängig ist. Zudem kann der Start des Parksuchverkehrs nur an zwei speziellen Punkten erkannt werden.

Aufgabe der vorliegenden Erfindung ist es daher eine Lösung zu schaffen, mittels derer auf einfache Weise der Beginn eines Parksuchverkehrs zuverlässig ermittelt werden kann.

Der Erfindung liegt die Erkenntnis zugrunde, dass diese Aufgabe gelöst werden kann, indem mit in dem Fahrzeug vorliegenden Daten eine Bestimmung des Beginns des Parksuchverkehrs erfolgt.

Gemäß einem ersten Aspekt betrifft die Erfindung daher ein Verfahren zum Verarbeiten von Messdaten eines Fahrzeuges zur Bestimmung des Beginns eines Parksuchverkehrs, wobei die Messdaten Positionsdaten darstellen, wobei eine Schätzung eines Parkzielpunktes durchgeführt wird.

Das Verfahren ist dadurch gekennzeichnet, dass eine Bestimmung eines frühesten Parksuchbeginn-Punktes durchgeführt wird und eine Fahrtanalyse zwischen dem Parksuchbeginn-Punkt und dem Parkzielpunkt zur Ermittlung des Beginns des Parksuchverkehrs unter Verwendung von Kartendaten durchgeführt wird, wobei die Kartendaten hierbei digitale Kartenpositionsdaten darstellen, die in Längen- und Breitengeraden angegeben sind, wobei eine Differenz zwischen den Kartendaten als der Zuwachs der Distanz zum Parkzielpunkt und eine Luftliniendifferenz als der Abstand zwischen zwei aufeinander folgenden Fahrtpositionen berechnet werden, wobei der Zuwachs durch Differenzbildung der Entfernungen zweier aufeinanderfolgender Punkte zu jeweils dem Parkzielpunkt entlang einer Route ab dem frühesten Parksuchbeginn-Punkt zum Parkzielpunkt berechnet werden, wobei als Insuffizienzfunktion ($\Delta e$) der Zuwachs der Distanz zu dem Parkzielpunkt ($\Delta d_{map}$) und der Abstand zwischen aufeinander folgenden Positionsdaten ($\Delta d_{airline}$) in Relation $\Delta d_{map}/\Delta d_{airline}$ gesetzt werden, wobei ein diskretes Integral über die Insuffizienzfunktion ($\Delta e$) berechnet wird, wobei bei Überschreiten eines Schwellwertes des diskreten Integrals ein Parksuchverkehr als erkannt gilt.

Die Messdaten eines Fahrzeuges sind Positionsdaten. Als Positionsdaten werden hierbei Koordinaten, insbesondere Längen- und Breitengradangaben für eine Position bezeichnet. Zusätzlich enthalten die Positionsdaten vorzugsweise einen Zeitstempel oder andere Zeitangaben über den Empfang oder das Ermitteln der Koordinaten enthalten. Diese Positionsdaten können über Global Positioning Systeme (GPS) oder andere Positioniersysteme ermittelt werden. Diese Positionsdaten werden an dem Fahrzeug empfangen oder dort ermittelt. Zusätzliche Informationen, wie beispielsweise die Geschwindigkeit des Fahrzeuges, werden bei dem erfindungsgemäßen Verfahren nicht zur Bestimmung des Beginns einer Parkplatzsuche benötigt.

Der Beginn eines Parksuchverkehrs wird erfindungsgemäß auch als Beginn der Parkplatzsuche oder Erkennen eines Parksuchverkehrs bezeichnet. Der Beginn des Parksuchverkehrs wird hierbei durch Positionsdaten zu der Position angegeben, an der sich das Fahrzeug beim Beginn der Parkplatzsuche befindet.

Die erfindungsgemäße Verarbeitung der Messdaten, die im Folgenden als Positionsdaten bezeichnet werden, kann in dem Fahrzeug oder in einer zu dem Fahrzeug separaten zentralen Rechnereinheit erfolgen. Bei der Verarbeitung im Fahrzeug erfolgt die Verarbeitung insbesondere in einer sogenannten On-Board-Unit. Die Verarbeitung in einer zentralen Rechnereinheit wird auch als off-board Verarbeitung bezeichnet.

Die allgemeine Idee, die erfindungsgemäß für die Parksuchverkehrserkennung verwendet wird, ist dass eine Parkplatzsuche, das heißt ein Parksuchverkehr sich durch Änderungen in dem Verhalten des Fahrers ausdrückt. Erfindungsgemäß wird daher davon ausgegangen, dass bei einer normalen Fahrt, die auch als Zielfahrt bezeichnet wird und bei der der Fahrer nicht nach einem verfügbaren Parkplatz sucht, der Fahrer die kürzeste Route zu seinem Zielort wählt. Es kann daher überprüft werden, ob es zwischen dem Parkzielpunkt, das heißt der eigentlichen Parkposition des Fahrzeuges und dem frühesten Parksuchbeginn-Punktes einen Zeitpunkt gibt, ab dem der Fahrer von diesem Verhalten drastisch abweicht.

Als Insuffizienz wird hierbei eine Abweichung von der kürzesten Verbindung zwischen einer Fahrtposition und der Parkposition bezeichnet.

Bei dem erfindungsgemäßen Verfahren wird hierzu zunächst der Parkzielpunkt, der auch als Endposition bezeichnet werden kann, geschätzt.

Der Parkzielpunkt kann die tatsächliche Parkposition des Fahrzeuges oder die Zielposition des Fahrers sein. Im letzteren Fall wird davon ausgegangen, dass der Fahrer in der Nähe des von ihm angestrebten Ziel parken wird. Die Parkzielposition wird erfindungsgemäß durch Positionsdaten, insbesondere Längen- und Breitengrad ausgedrückt. Vorzugsweise ist zusätzlich zu diesen Koordinaten eine Zeitangabe in den Positionsdaten zu der Parkzielposition enthalten. Die Bestimmung der Parkzielposition kann auch durch eine Zielführung erfolgen. Hierbei wird beispielsweise von einem Navigationssystem eine Parkzielposition bestimmt oder von dem Benutzer des Fahrzeuges eingegeben.

Zudem wird bei dem erfindungsgemäßen Verfahren der früheste Parksuchbeginn-Punkt bestimmt. Der früheste Parksuchbeginn-Punkt wird vorzugsweise unter Verwendung des ermittelten Parkzielpunktes bestimmt. Der früheste Parksuchbeginn-Punkt kann auch als der frühest mögliche Parksuchbeginn-Punkt oder als der erste mögliche Parksuchbeginn-Punkt bezeichnet werden.

Die Bestimmung des frühesten Parksuchbeginn-Punktes erfolgt vorzugsweise unter Verwendung von zwei Annahmen. Insbesondere wird ein maximaler Luftlinienabstand zu dem ermittelten Parkzielpunkt angenommen. Zum anderen kann zusätzlich oder alternativ eine zeitliche Beschränkung angesetzt werden. Hierbei wird als zweite Annahme davon ausgegangen, dass ein Parksuchverkehr zeitlich erst nach dem Durchfahren des bestimmten Distanzmaximums, das heißt dem maximalen Abstand zum Ziel, beginnen kann. Diese Annahme trägt der Tatsache Rechnung, dass der Parksuchverkehr auf keinem Fall in einem Bereich liegen kann, der zeitlich vor dem Zeitpunkt des frühesten Parksuchbeginn-Punktes liegt. Diese Annahme kann durch die folgende Formel ausgedrückt und in dem erfindungsgemäßen Verfahren berücksichtigt werden:

$$t_{parksuche\_fr\ddot{u}hest}$$

$$\leq max_i\{Distanz\,(GPS - Position\,(t_i), GPS - Position\,(GPS - Position(t_{Ziel})\}$$

Zwischen den so ermittelten Punkten, das heißt dem Parkzielpunkt und dem frühesten Parksuchbeginn-Punkt wird eine Fahrtanalysen zur Ermittlung des Beginns des Parksuchverkehrs unter Verwendung von Kartendaten durchgeführt.

Das Ergebnis der Fahrtanalyse kann mittelbar oder unmittelbar das Erkennen des Parksuchverkehrs darstellen, das heißt den Beginn des Parksuchverkehrs mittelbar oder unmittelbar angeben.

Das Erkennen des Parksuchverkehrs umfasst gemäß der vorliegenden Erfindung vorzugsweise die Ausgabe einer Information über zumindest die Position, an der der Parksuchverkehr begonnen hat. Diese Information kann beispielsweise einen Index darstellen, der Koordinaten und eine Zeitangabe, wann die Position durchfahren wurde, umfasst. Zudem können entsprechende Informationen auch bezüglich des betrachteten Parkzielpunktes ausgegeben werden. Diese Informationen können onboard verarbeitet, gespeichert und/oder einer externen Rechnereinheit zur weiteren Verarbeitung zur Verfügung gestellt werden.

Indem zum einen eine Fahrtanalyse nur in einem begrenzten räumlichen und vorzugsweise auch zeitlichen Bereich zu dem Parkzielpunkt durchgeführt wird und diese zum anderen unter Verwendung von Kartendaten, die an dem Fahrzeug verfügbar sind, durchgeführt wird, kann das Verfahren schnell und zuverlässig ausgeführt werden und bedarf nur einer geringen Rechnerkapazität.

Gemäß einer bevorzugten Ausführungsform werden für die Fahrtanalyse ausschließlich erfasste Positionsdaten und Kartendaten verwendet.

Da im Gegensatz zum Stand der Technik bei der vorliegenden Erfindung lediglich erfasste Positionsdaten und Kartendaten zur Ermittlung der Insuffizienz verwendet werden, ist die Rechnerleistung, die zur Durchführung des Verfahrens erforderlich ist, minimiert. Insbesondere ist eine aufwändige Bestimmung von Merkmalen oder Vektoren für jede Fahrtposition nicht erforderlich. Das Verfahren kann somit auch auf einem in dem Fahrzeug vorgesehenen Gerät, beispielsweise einer sogenannten Onboard-Unit, ausgeführt werden, das heißt es kann eine onboard Ermittlung des Parksuchverkehrs und insbesondere des Beginns der Parkplatzsuche erfolgen. Zudem kann das Verfahren auch online, das heißt während der Fahrt durchgeführt werden.

Der Fahrtweg stellt den tatsächlich vom Fahrzeug zurückgelegten Weg dar. Der Fahrtweg kann durch eine Reihe aus aufeinanderfolgenden Positionen, das heisst erfasster Positionsdaten des Fahrzeuges ermittelt werden, an denen sich das Fahrzeug während der Fahrt befunden hat oder aktuell befindet. Die erfassten Positionen auf dem Fahrtweg, die auch als Fahrtpositionen bezeichnet werden können, werden durch Positionsdaten, insbesondere Längen- und Breitegrade ausgedrückt. Diese Positionsdaten werden als Messdaten an dem Fahrzeug in regelmäßigen Zeitintervallen, beispielsweise jede Sekunde, empfangen oder ermittelt und somit erfasst. Somit kann der Fahrtweg oder ein Teil des Fahrtweges durch die Summe der Abstände zwischen den einzelnen Fahrtpositionen ermittelt werden.

Vorzugsweise wird erfindungsgemäß zusätzlich zu den Positionsdaten entlang des Fahrtweges auch der Abstand zu dem Parkzielpunkt entlang einer Route berücksichtigt. Als Route oder Streckenführung wird hierbei eine Strecke bezeichnet, die anhand von Kartendaten ermittelt wird. Hierbei wird als Route die kürzeste Strecke, die entlang eines Straßenverlaufs, der auf der Karte vorhanden ist, zwischen einer Position des Fahrzeuges und der Parkzielposition bezeichnet.

Die anhand einer Karte ermittelte Strecke kann hierbei insbesondere eine durch ein Navigationssystem ermittelte Streckenführung, die auch als Fahrtroute oder Route bezeichnet werden kann, darstellen. Hierbei wird nicht nur das Vorhandensein von Strassen berücksichtigt, sondern gegebenenfalls auch die Nutzbarkeit der Strasse für den geplanten Fahrtweg. Beispielsweise können bei einer Streckenführung Hindernisse, wie Einbahnstrassen und dergleichen berücksichtigt werden. In einer einfachen Ausführungsform ist es aber auch ausreichend, wenn lediglich das Vorhandensein einer Strasse anhand der Kartendaten überprüft wird und entsprechend dieser Kartendaten die kürzeste Strecke berechnet wird. Kartendaten stellen hierbei digitale Kartenpositionsdaten dar. Diese sind wie auch die Positionsdaten des Fahrzeuges als Koordinaten, insbesondere in Längen- und Breitengeraden angegeben. Hierdurch kann ein Vergleich zwischen den Fahrtpositionen und der Karte auf einfache Weise erfolgen. Die Kartendaten liegen in dem Fahrzeug, beispielsweise in einem Navigationssystem vor oder es kann auf diese Daten zugegriffen werden. Zudem ist durch ein Navigationssystem eines Fahrzeuges die sogenannte Routing-Fähigkeit gegeben, das heißt die kürzeste Strecke wird als Streckenführung zwischen einer Fahrtposition, die den frühesten Parksuchbeginn-Punkt darstellen kann, und der Endposition, insbesondere der Parkzielposition, kann durch das Navigationssystem bestimmt werden und für das erfindungsgemäße Verfahren zur Verfügung gestellt werden. Die Begriffe Strecke auf der Karte und Streckenführung werden im Folgenden sofern nicht anders angegeben als Synonyme verwendet.

Erfindungsgemäß werden eine Differenz zwischen Kartendaten und eine Luftliniendifferenz zwischen Fahrpositionen berechnet. Hierbei wird als Differenz zwischen Kartendaten der Zuwachs der Distanz zum Parkzielpunkt berechnet. Dieser Zuwachs wird für alle Punkte auf einer Route ab dem frühestmöglichen Parksuchbeginn-Punkt durch Berechnung der Entfernung auf der Karte zum Parkzielpunkt bestimmt. Hierbei wird der Zuwachs durch Differenzbildung der Entfernungen zweier aufeinanderfolgender Punkte zu jeweils dem Parkzielpunkt entlang der Route berechnet. Zur Bestimmung Luftliniendifferenz wird zusätzlich der Abstand zwischen zwei aufeinander folgenden Fahrtpositionen, das heißt GPS-Punkten bestimmt. Dieser Abstand stellt den Luftlinienabstand zwischen erfassten GPS-Punkten dar. Dieser Abstand wird für jeden der Punkte auf der Route berechnet.

Diese beiden Werte, das heißt der Zuwachs der Distanz zu dem Parkzielpunkt und der Abstand zwischen aufeinander folgenden Positionsdaten werden in Relation gesetzt und so eine Insuffizienzfunktion definiert. Die Insuffizienzfunktion $\Delta e$ stellt den Quotienten aus $\Delta d_{map}$ und $\Delta d_{airline}$, das heißt den Quotienten aus dem Zuwachs der Distanz zum Parkzielpunkt und dem Abstand zwischen zwei aufeinander folgenden GPS-Punkten dar. Hierdurch wird die Abweichung der gefahrenen Route von der optimalen Route pro gefahrener Distanz berechnet. Zudem wird auch eine Abweichung der Route von der Luftlinienentfernung zwischen zwei GPS-Punkten, das heißt Fahrtpositionen erfasst.

Erfindungsgemäß wird ein diskretes Integral über die Funktion der Insuffizienz, die durch die Kartendistanzen und eine Luftliniendifferenz definiert ist, berechnet. Für den frühesten Parksuchbeginn-Punkt wird das diskrete Integral hierbei mit Null festgelegt. Das diskrete Integral wird erfindungsgemäß über die Zeit ermittelt. Indem das Integral der Insuffizienzfunktion über die Zeit ermittelt wird, kann ein einmaliges Abweichen von der optimalen Strecke ausgeglichen werden. Zudem weist die Berechnung des diskreten Integrals den Vorteil auf, dass dieses auf einfache und schnelle Weise berechnet werden kann und somit die Bestimmung des Parksuchverkehrs einfach und schnell erfolgen kann.

Bei der Fahrtanalyse kann entweder fortlaufend der Wert der Insuffizienzfunktion bestimmt und das diskrete Integral für die jeweilige Fahrtposition berechnet werden.

Erfindungsgemäß gilt ein Parksuchverkehr als erkannt, sobald der Wert des diskreten Integrals über die Insuffizienzfunktion einen Schwellwert überschreitet. In dem Fall wird ab der Position, für die das Integral den Schwellwert überstiegen hat, ein Parksuchverkehr als erkannt angenommen. Vorzugsweise werden aber bei der Fahrtanalyse aber zwei Schwellwerte für das diskrete Integral betrachtet. Insbesondere wird ein Parksuchverkehr nur dann angenommen, wenn zum einen das Integral einen höheren Schwellwert überschreitet und zum anderen zu einem früheren Zeitpunkt bereits erstmals ein geringerer Schwellwert überschritten wurde. Die Position des früheren Zeitpunktes wird bei dieser bevorzugten Ausführungsform als Beginn der Parksuche erkannt. Hierdurch kann das Ergebnis des erfindungsgemäßen Verfahrens weiter verbessert werden und insbesondere eine Plausibilisierung vorgenommen werden.

Die Analyse wird erfindungsgemäß vorzugsweise von dem frühesten Parksuchbeginn-Punkt aus in Richtung auf den Zielpunkt durchgeführt. Dies weist den Vorteil auf, dass die Analyse abgebrochen werden kann, sobald ein Parksuchverkehr erkannt ist.

Gemäß einem weiteren Aspekt betrifft die Erfindung ein Computerprogrammprodukt, das in einem digitalen Rechner oder Rechnersystem geladen werden kann und Softwarecodeabschnitte umfasst, mit denen die Schritte gemäß einem der vorstehenden Ansprüche ausgeführt werden, wenn das Produkt auf dem Rechner oder Rechnersystem läuft.

Die Softwarecodeabschnitte können auch als Algorithmus bezeichnet werden. Vorzugsweise umfasst das Computerprogrammprodukt zumindest zwei Sektionen, wobei eine Sektion den Schritt der Schätzung des Parkzielpunktes und der Bestimmung des frühesten Parksuchbeginn-Punktes darstellt und die zweite Sektion der Fahrtanalyse zwischen diesen Punkten dient. Die beiden Sektionen des Computerprogrammprodukts, die vorzugsweise Softwarecodeabschnitte darstellen, sind vorzugsweise so miteinander verbunden, dass die Ergebnisse der ersten Sektion mittelbar oder unmittelbar der zweiten Sektion zur Verfügung gestellt werden können. Erfindungsgemäß können die Ergebnisse der ersten Sektion der zweiten Sektion mittelbar zur Verfügung gestellt werden und insbesondere zunächst in einem Speicher abgelegt werden.

Das Computerprogrammprodukt und insbesondere die Softwarecodeabschnitte oder Sektionen weisen vorzugweise mindestens eine Schnittstelle zu einem Navigationssystem des Fahrzeuges auf. Diese Schnittstelle kann als ein Abrufbefehl in dem Softwarecodeabschnitt hinterlegt sein. Über diese Schnittstelle, kann eine für das erfindungsgemäße Verfahren notwendige Strecke oder Streckenführung oder andere Kartendaten von dem Navigationssystem abgefragt werden.

Der oder die Softwarecodeabschnitt(e) können erfindungsgemäß vorzugsweise auf die Längen- und Breitengrade der Positionen des Fahrzeuges mit einer Frequenz von beispielsweise einer Sekunde zugreifen. Zudem kann der Softwarecodeabschnitt auch eine Funktion umfassen, die die Berechnung des gerouteten Abstandes innerhalb einer Karte von zwei Positionen erlaubt oder die auf eine solche Funktion zugreifen.

Vorteile und Merkmale, die bezüglich des erfindungsgemäßen Verfahrens beschrieben werden, gelten - soweit anwendbar - ebenfalls für das erfindungsgemäße Computerprogrammprodukt und umgekehrt. Die Vorteile und Merkmale werden hierbei gegebenenfalls nur einmalig beschrieben.

Erfindungsgemäß kann das Verfahren durchgeführt werden mit einem System, das aus einer Messeinheit im Fahrzeug besteht, die während der Fahrt in äquidistanten Zeitschritten $t_i$ eine Position $p_i$ misst. Die Auswertung erfolgt direkt im Fahrzeug am Ende der Fahrt oder nach Übermittlung der Daten an eine zentrale Einheit.

Die Auswertung der Daten erfolgt erfindungsgemäß in drei Schritten, nämlich der Zielschätzung, der Bestimmung des frühesten Parksuchbeginn-Punktes und der Fahrtanalyse.

Die Zielschätzung kann durch Durchführung einer Zielführung, das heißt einer Streckenbestimmung beziehungsweise einem Routing erfolgen. In einer einfachen Ausführung kann als Schätzung angenommen werden, dass das tatsächliche Ziel des Fahrers äquivalent zu der finalen Parkposition, das heißt dem Parkzielpunkt ist.

Die Bestimmung des frühesten Parksuchbeginn-Punktes, der auch als frühestmöglicher Parksuchbeginn bezeichnet werden kann, erfolgt unter zwei Annahmen. Erstens wird davon ausgegangen, dass dieser Punkt innerhalb eines Maximalabstandes zum Parkzielpunkt liegt. Der Maximalabstand wird als Luftlinienabstand berechnet, wodurch sich die Schätzung vereinfacht. Beispielsweise kann hier ein Abstand von 500m Luftlinie angenommen werden. Zum anderen wird davon ausgegangen, dass der Beginn des Parksuchverkehrs später als das Distanzmaximum, das heißt der oben genannte Maximalabstand zum Parkzielpunkt, liegen muss. Dies bedeutet, dass zusätzlich zu der Überprüfung des Abstandes per Luftlinie auch die Zeit, wann eine Position durchfahren wird, überprüft wird. Der frühestmögliche Parksuchbeginn-Punkt muss somit zeitlich nach dem Punkt auf der Route, der in dem Maximalabstand zu dem Parkzielpunkt liegt, durchfahren worden sein.

Damit die Verkehrssituation realistischer dargestellt wird, sind ab dem frühesten Parksuchbeginn-Punkt die Entfernungen auf der Karte, das heißt der durch Routing ermittelten Route oder Strecke, erforderlich. Bei der anschließend durchgeführten Fahrtanalyse zwischen dem so geschätzten Parkzielpunkt und dem Parksuchbeginn-Punkt werden daher die Kartendistanzen zum Parkzielpunkt von allen Punkten auf dieser Route und eine Luftliniendifferenz berechnet. Grundidee ist die Analyse der Fahrt auf Insuffizienz.

In diesem Zusammenhang wird eine Insuffizientfunktion definiert

$$\Delta e = \frac{\text{Zuwachs der Distanz zum Ziel}}{\text{Abstand zwischen zwei aufeinande rfolgenden GPS - Punkten}} = \frac{\Delta d_{map}}{\Delta d_{airline}}$$

Diese berücksichtigt die Abweichung der gefahrenen Route von der optimalen Route pro gefahrener Distanz.

Der Zähler der Insuffizienzfunktion berechnet sich mit der Kartendistanz, der Nenner mit der Luftliniendistanz, nämlich der Differenz zweier aufeinander folgender GPS-Punkte, das heißt Fahrtpositionen.

Der Nenner kann daher durch folgende Formel ausgedrückt werden:

$$\Delta dairline = GPS\ Position\ (t) - GPS\ Position\ (t-1)$$

Für den Zuwachs der Distanz zum Ziel erfolgt erfindungsgemäß vorzugsweise für jeden Punkt, das heißt für jede Fahrtposition, eine Routenberechnung zum Parkzielpunkt.

Für jede Berechnung von $\Delta e$ werden dann für aufeinanderfolgende Fahrtpositionen, das heißt GPS-Positionen die Differenz der Kartendistanz berechnet. Hierbei wird folgende Formel angewendet:

$$\Delta dmap = Distanz_{Karte}\ (GPS\ Position\ (t), Parkzielpunkt)$$
$$- Distanz_{Karte}(GPS\ Position\ (t-1), Parkzielposition)$$

Es wird davon ausgegangen, dass bei einem Punktabstand der GPS-Positionen von wenigen Metern die Route oder Strecke auf der Karte nur unwesentlich länger als die Luftlinienentfernung ist.

Der Wert der Insuffizienzfunktion $\Delta e$ ist immer größer als -1. Im effizientesten Fall, das heißt bei einer Fahrt in die Richtung des Parkzielpunktes entlang der Luftlinie, ergibt sich ein Quotient von -1, im ineffizienten Fall ein Wert von größer 0. Die Insuffizienzfunktion wird ab dem frühesten Parksuchbeginn-Punktes berechnet.

Anschließend wird das diskrete Integral über $\Delta e$ berechnet. Hierbei wird zunächst überprüft, ob ein Fehlerzuwachs vorliegt, das heißt ob $\Delta e > 0$ ist. Das Integral wird wie folgt berechnet:

$$I(t) = I(t-1) + \Delta e \cdot \Delta t \quad falls\ \Delta e > 0$$

$$I(t) = I(t-1) \quad falls\ \Delta e \leq 0$$

Mit

$$I(0) = 0$$

Überschreitet I(t) einen bestimmten Wert (beispielsweise 15.000[ms]), so kann von einem Parksuchverkehr ausgegangen werden und der Algorithmus, mittels dessen das Verfahren durchgeführt wird, kann das Vorliegen einer Parksuchfahrt melden. Als Beginn des Parksuchverkehrs wird dann die Position angegeben, an der das Integral vorher erstmals einen weiteren, geringeren Schwellwert (beispielsweise 500[ms]) überschritten hat.

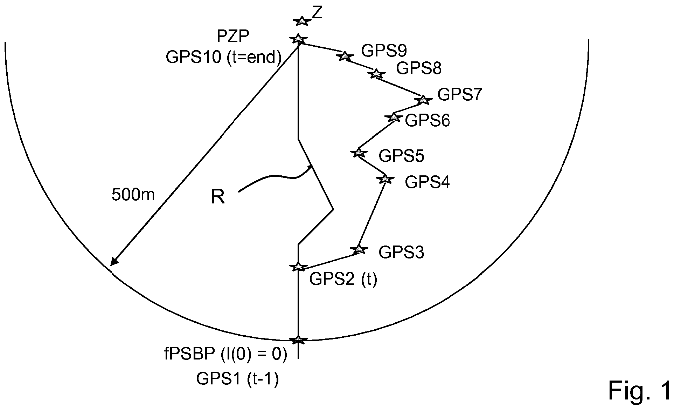

Die Erfindung wird im Folgenden erneut unter Bezugnahme auf eine Ausführungsform der Erfindung und die beiliegende Figur 1 genauer beschrieben. Hierbei zeigt

Figur 1: eine schematische Darstellung von GPS-Punkten und einer Route.

Bei diesem Beispiel sollte sich das Fahrzeug entlang der Route R zu dem Parkzielpunkt PZP, der in der Figur 1 in der unmittelbaren Nähe des Ziels Z liegt, bewegen. Ab einem Umkreis von beispielsweise 500m werden die Positionen des Fahrzeuges in Form von GPS-Positionen, die ohnehin an dem Fahrzeug empfangen werden erfasst und daraus die Insuffizienzfunktion berechnet. Bewegt sich das Fahrzeug in dem in Figur 1 gezeigten Beispiel von dem ersten GPS-Punkt GPS1, der den frühesten Parksuchbeginn-Punkt fPSBP darstellt, zu dem zweiten GPS-Punkt GPS 2. Wird für diese Punkte die Insuffizienzfunktion wie oben angegeben berechnet, ergibt sich hierbei ein Wert von minus eins (-1). Am GPS-Punkt GPS3 weicht das Fahrzeug von der Route R ab. Die Insuffizienzfunktion für diesen GPS-Punkt GPS 3 beträgt beispielsweise eins (1). In gleicher Weise wird die Insuffizienzfunktion für die weiteren GPS-Punkte berechnet.

Nach der Berechnung Insuffizienzfunktion wird das diskrete Integral über die Zeit ermittelt. Hierbei wird beim Überschreiten eines Schwellwertes überprüft, ob zuvor bereits ein geringerer Schwellwert überschritten wurde. Die Position, an der dieser geringere Schwellwert überschritten wurde, wird dann als Beginn des Parksuchverkehrs betrachtet und kann ausgegeben werden.

Mit der vorliegenden Erfindung kann eine Reihe von Vorteilen erzielt werden. Beispielsweise kann die durch die Erfindung mögliche genauere Berechnung des Beginns des Parksuchverkehrs zu einer genaueren Prognose von Parkinformationen führen. Zusätzlich kann diese Information für Stadtplaner dienen. Das System, mit dem das erfindungsgemäße Verfahren ausgeführt werden kann, ist in einem Serienfahrzeug umsetzbar.

**Bezugszeichenliste**

| | |
|---|---|
| GPS-n | Fahrtpositionen |
| R | Route / Strecke |
| PZP | Parkzielpunkt |
| Z | Ziel |
| fPSBP | frühester Parksuchbeginn-Punkt |

**Patentansprüche**

1. Verfahren zum Verarbeiten von Messdaten eines Fahrzeuges zur Bestimmung des Beginns eines Parksuchverkehrs, wobei

   die Messdaten Positionsdaten darstellen,
   wobei eine Schätzung eines Parkzielpunktes durchgeführt wird, **dadurch gekennzeichnet, dass**
   eine Bestimmung eine frühesten Parksuchbeginn-Punktes durchgeführt wird und eine Fahrtanalysen zwischen dem Parksuchbeginn-Punkt und dem Parkzielpunkt zur Ermittlung des Beginns des Parksuchverkehrs unter Verwendung von Kartendaten durchgeführt wird, wobei die Kartendaten hierbei digitale Kartenpositionsdaten darstellen, die in Längen- und Breitengeraden angegeben sind,
   wobei eine Differenz zwischen den Kartendaten als der Zuwachs der Distanz zum Parkzielpunkt und eine Luftliniendifferenz als der Abstand zwischen zwei aufeinander folgenden Fahrtpositionen berechnet werden, wobei der Zuwachs durch Differenzbildung der Entfernungen zweier aufeinanderfolgender Punkte zu jeweils dem Parkzielpunkt entlang einer Route ab dem frühesten Parksuchbeginn-Punkt zum Parkzielpunkt berechnet werden,
   wobei als Insuffizienzfunktion ($\Delta$e) der Zuwachs der Distanz zu dem Parkzielpunkt $\Delta d_{map}$ und der Abstand zwischen aufeinander folgenden Positionsdaten $\Delta d_{airline}$ in Relation $\Delta d_{map}/\Delta d_{airline}$ gesetzt werden, wobei ein diskretes Integral über die Insuffizienzfunktion ($\Delta$e) berechnet wird, wobei bei Überschreiten eines Schwellwertes des diskreten Integrals ein Parksuchverkehr als erkannt gilt.

2. Verfahren nach Anspruch 1, **dadurch gekennzeichnet, dass** für die Fahrtanalyse ausschließlich erfasste Positionsdaten und die Kartendaten verwendet werden.

3. Verfahren nach einem der Ansprüche 1 bis 2, **dadurch gekennzeichnet, dass** bei der Fahrtanalyse zwei Schwellwerte für das diskrete Integral betrachtet werden und ein Parksuchverkehr nur dann als erkannt gilt, wenn beide Schwellwerte überschritten werden.

4. Verfahren nach einem der Ansprüche 1 bis 3, **dadurch gekennzeichnet, dass** die Analyse von dem frühesten Parksuchbeginn-Punkt aus in Richtung auf den Parkzielpunkt durchgeführt wird.

5. Computerprogrammprodukt, das in einem digitalen Rechner oder Rechnersystem geladen werden kann und Softwarecodeabschnitte umfasst, mit denen die Schritte gemäß einem der vorstehenden Ansprüche ausgeführt werden, wenn das Produkt auf dem Rechner oder Rechnersystem läuft.

**Claims**

1. Method for processing measurement data of a vehicle in order to determine the beginning of traffic searching for a parking space,

   the measurement data being position data, wherein estimation of a parking destination is performed, **characterized in that**
   determination of an earliest point of beginning to search for a parking space is performed, and

journey analysis between the point of beginning to search for a parking space and the parking destination in order to ascertain the beginning of the traffic searching for a parking space is performed using map data, the map data in this case being digital map position data indicated in degrees longitude and latitude,

wherein a difference between the map data as the increase in the distance from the parking destination, and an airline difference as the interval between two successive journey positions, are computed, the increase being computed by calculating the difference between the ranges of each of two successive points from the parking destination along a route from the earliest point of beginning to search for a parking space to the parking destination,

wherein the increase in the distance from the parking destination $\Delta d_{map}$ and the interval between successive position data $\Delta d_{airline}$ are put into a relationship $\Delta d_{map}/\Delta d_{airline}$ as an insufficiency function ($\Delta e$), a discrete integral being computed over the insufficiency function ($\Delta e$), wherein traffic searching for a parking space is deemed to have been identified when a threshold value of the discrete integral is exceeded.

2. Method according to Claim 1, **characterized in that** exclusively captured position data and the map data are used for the journey analysis.

3. Method according to either of Claims 1 to 2, **characterized in that** the journey analysis involves considering two threshold values for the discrete integral, and traffic searching for a parking space is deemed to have been identified only if both threshold values are exceeded.

4. Method according to one of Claims 1 to 3, **characterized in that** the analysis is performed from the earliest point of beginning to search for a parking space in the direction of the parking destination.

5. Computer program product that can be loaded into a digital computer or computer system and comprises software code sections that are used to perform the steps according to one of the preceding claims when the product runs on the computer or computer system.

**Revendications**

1. Procédé permettant de traiter des données de mesure d'un véhicule pour déterminer le début d'un déplacement de recherche de stationnement, dans lequel

les données de mesure représentent des données de position, dans lequel
une estimation d'un point cible de stationnement est effectuée, **caractérisé en ce que**
une détermination d'un point de début de recherche de stationnement le plus tôt est effectuée, et
une analyse de trajet entre le point de début de recherche de stationnement et le point cible de stationnement est effectuée pour établir le début du déplacement de recherche de stationnement en utilisant des données cartographiques, les données cartographiques représentant ici des données de position cartographiques numériques qui sont indiquées en longitudes et latitudes, dans lequel une différence entre les données cartographiques est calculée comme une augmentation de la distance jusqu'au point cible de stationnement, et une différence d'orthodromie est calculée comme la distance entre deux positions de trajet consécutives, dans lequel l'augmentation est calculée par la soustraction des distances de deux points consécutifs jusqu'au point cible de stationnement respectivement le long d'un itinéraire à partir du point de début de recherche de stationnement le plus tôt jusqu'au point cible de stationnement,
dans lequel comme fonction d'insuffisance ($\Delta e$), on met l'augmentation de la distance jusqu'au point cible de stationnement $\Delta d_{map}$ et la distance entre des données de position consécutives $\Delta d_{airline}$ dans la relation $\Delta d_{map}/\Delta d_{airline}$, dans lequel une intégrale discrète est calculée par l'intermédiaire de la fonction d'insuffisance ($\Delta e$), dans lequel en cas de dépassement d'une valeur seuil de l'intégrale discrète, un déplacement de recherche de stationnement est considéré comme reconnu.

2. Procédé selon la revendication 1, **caractérisé en ce que** seules des données de position acquises et les données cartographiques sont utilisées pour l'analyse de trajet.

3. Procédé selon l'une quelconque des revendications 1 à 2, **caractérisé en ce que** lors de l'analyse de trajet, deux valeurs seuils sont prises en considération pour l'intégrale discrète et un déplacement de recherche de stationnement n'est considéré comme reconnu que si les deux valeurs seuils sont dépassées.

4. Procédé selon l'une quelconque des revendications 1 à 3, **caractérisé en ce que** l'analyse est effectuée à partir du point de début de recherche de stationnement le plus tôt en direction du point cible de stationnement.

5. Produit de programme informatique qui peut être chargé sur un ordinateur numérique ou un système informatique et comprend des sections de code programme à l'aide desquelles les étapes selon l'une quelconque des revendications précédentes sont exécutées lorsque le produit s'exécute sur l'ordinateur ou le système informatique.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012212347 A1
- DE 102012201472 A1
- US 20100052946 A1
- JP 2012177712 A